# EUROPEAN PATENT APPLICATION

(11) **EP 4 675 009 A1**
(43) Date of publication of application: **07.01.2026**
(21) Application number: 24927602.3
(22) Date of filing: 16.05.2024
(51) Int. Cl.: C23C 22/00

(54) **COATING AGENT FOR FORMING ETCHING RESIST COATING FILM**

(71) Applicant: JFE Steel Corporation, Tokyo 100-0011 (JP); Dai Nippon Toryo Co., Ltd., Osaka-shi, Osaka 542-0081 (JP)
(72) Inventor: NAKAGAWA, Nobuko, Tokyo 100-0011 (JP); MURAMATSU, Naoki, Tokyo 100-0011 (JP); TADA, Chiyoko, Tokyo 100-0011 (JP); NAKAMURA, Kengo, Komaki-shi, Aichi 485-8516 (JP); SUGISHITA, Tomonori, Otawara-shi, Tochigi 324-8516 (JP)
(74) Representative: Haseltine Lake Kempner LLP
(86) International application number: PCT/JP2024/018227
(87) International publication number: WO 2025/238822

(57) **Abstract**

Provided is a coating agent for etching resist coating formation that is capable of forming an etching resist coating having an excellent resist property and removability. The coating agent for etching resist coating formation contains, as solid content equivalent in a solvent: 100 parts by mass of an aqueous alkyd resin; 0.10 parts by mass or more and 30 parts by mass or less of a melamine resin; and 5.0 parts by mass or more and 100 parts by mass or less of an extender pigment. A total amount of the solid content of the aqueous alkyd resin, the melamine resin, and the extender pigment is 80 mass% or more of total solid content.

## Description

### TECHNICAL FIELD

The present disclosure relates to a coating agent for etching resist coating formation that is used to form an etching resist coating on the surface of a grain-oriented electrical steel sheet.

### BACKGROUND

Grain-oriented electrical steel sheets have excellent magnetic properties and are therefore primarily used as material for the iron cores of transformers. In order to improve the energy efficiency of transformers, it is necessary to decrease the iron loss of grain-oriented electrical steel sheets. One method known for decreasing the iron loss of a grain-oriented electrical steel sheet is to introduce linear grooves into the surface of the grain-oriented electrical steel sheet. In this method, non-uniform strain is introduced by forming linear grooves on the surface of the steel sheet. This subdivides the width of magnetic domains, decreasing iron loss.

One method of forming linear grooves on the surface of a steel sheet is known to be an etching treatment using an etching resist coating. For example, Patent Literature (PTL) 1 describes a method of forming linear grooves on the surface of a steel sheet by applying a coating agent for etching resist coating formation to the surface of the steel sheet while leaving continuous or discontinuous linear regions in a direction intersecting the rolling direction as non-coated regions, carrying out a baking treatment, and then carrying out an etching treatment. PTL 2 describes a method in which a cold-rolled sheet that is not necessarily flat is coiled around a roller surface, and a coating agent for etching resist coating formation is applied while adjusting the shape of the cold-rolled sheet, thereby correctly leaving the above-described non-coated region and decreasing variation in the shape of linear grooves formed by the etching treatment.

### CITATION LIST

### Patent Literature

PTL 1: JP H04-88121 A
PTL 2: JP H06-108300 A

### SUMMARY

### (Technical Problem)

As a result of their own investigations, the inventors have discovered that there is room for improvement in the characteristics of the etching resist coating formed on the surface of a grain-oriented electrical steel sheet according to the above-mentioned conventional technology. Specifically, when electrolytic etching is carried out using an etching resist coating according to conventional technology, there are cases where a portion of the surface of the etching resist coating is discolored, causing a change in appearance. The change in color tone of the etching resist coating suggests that the resistance of the etching resist coating to the electrolytic etching solution (hereinafter, sometimes referred to as "resist property") has decreased.

Further, according to conventional technology, when using a strong alkaline aqueous solution to strip and remove an etching resist coating that is no longer needed after the etching treatment is completed, there have been cases where a portion of the etching resist coating does not strip off and remains on the surface of the grain-oriented electrical steel sheet.

The present disclosure is made in view of the above problems associated with conventional technology, and it would be helpful to provide a coating agent for etching resist coating formation capable of forming an etching resist coating having excellent resist property and removability.

### (Solution to Problem)

Primary features of the present disclosure are as follows.
[1] A coating agent for etching resist coating formation, the coating agent comprising, as solid content equivalent in a solvent:
   100 parts by mass of an aqueous alkyd resin;
   0.10 parts by mass or more and 30 parts by mass or less of a melamine resin; and
   5.0 parts by mass or more and 100 parts by mass or less of an extender pigment, wherein
   a total amount of the solid content of the aqueous alkyd resin, the melamine resin, and the extender pigment is 80 mass% or more of total solid content.
[2] The coating agent for etching resist coating formation according to [1], wherein the aqueous alkyd resin is an aqueous alkyd resin obtained by reacting an alkyd resin with a polymerizable vinyl monomer.
[3] The coating agent for etching resist coating formation according to [1] or [2], wherein a proportion of the total solid content in the coating agent for etching resist coating formation is 10 mass% or more and 80 mass% or less.
[4] The coating agent for etching resist coating formation according to any one of [1] to [3], wherein the solvent contains ethylene glycol mono-n-butyl ether.

### (Advantageous Effect)

The etching resist coating formed by applying the coating agent for etching resist coating formation according to the present disclosure to the surface of a grain-oriented electrical steel sheet and applying baking treatment has superior resist property and removability compared to conventional technology.

### DETAILED DESCRIPTION

A detailed description is provided below.

### <Coating agent for etching resist coating formation>

According to an embodiment, the present disclosure provides
a coating agent for etching resist coating formation, the coating agent comprising, as solid content equivalent in a solvent:
100 parts by mass of an aqueous alkyd resin;
0.10 parts by mass or more and 30 parts by mass or less of a melamine resin; and
5.0 parts by mass or more and 100 parts by mass or less of an extender pigment, wherein
a total amount of the solid content of the aqueous alkyd resin, the melamine resin, and the extender pigment is 80 mass% or more of total solid content.

The coating agent for etching resist coating formation according to the present disclosure is composed mainly of an aqueous alkyd resin, to which a melamine resin as a crosslinking agent and an extender pigment as an extender are added, and the mixture is dissolved or mixed in a solvent. The coating agent for etching resist coating formation according to the present disclosure is applied to the surface of a grain-oriented electrical steel sheet and baking treatment is applied at a defined temperature for a defined time, whereby evaporation of the solvent and a crosslinking reaction occur, forming an etching resist coating on the surface of the grain-oriented electrical steel sheet. In the present disclosure, "coating agent for etching resist coating formation" refers to a liquid coating agent containing a resin as a main component, the liquid coating agent being used for etching resist coating formation. In the present disclosure, "etching resist coating" refers to a solid coating formed on the surface of a substrate from the coating agent for etching resist coating formation through the above-mentioned processes. The term "etching resist" as typically used sometimes means a coating agent for etching resist coating formation, and sometimes means an etching resist coating. Hereinafter, the two terms "coating agent for etching resist coating formation" and "etching resist coating" are used strictly separately.

As described above, the coating agent for etching resist coating formation is applied while leaving continuous or discontinuous linear regions in a direction intersecting with the rolling direction as non-coated regions. During the etching treatment, in the coated region protected by the etching resist coating, contact between the surface of the grain-oriented electrical steel sheet and the etching solution is inhibited, and corrosion of the grain-oriented electrical steel sheet does not occur. In the non-coated regions, the surface of the grain-oriented electrical steel sheet comes into contact with the etching solution, causing corrosion and forming linear grooves. After the etching treatment is completed, the etching resist coating is removed as required.

### <Solid content and solid content equivalent>

Before describing each component contained in the coating agent for etching resist coating formation according to the present disclosure, the method of expressing the components is described. Hereinafter, "solid content" refers to remaining solid components of the coating agent for etching resist coating formation, excluding substances that are lost by evaporation, such as solvent and water. When the coating agent for etching resist coating formation is applied to the surface of a grain-oriented electrical steel sheet and baking treatment is applied, solvent, water, and the like evaporate, and the remaining solid content forms an etching resist coating.

Hereinafter, "solid content equivalent" refers to, when expressing the content of a component contained in the coating agent for etching resist coating formation, content based on the solid content of each component. As described below, the coating agent for etching resist coating formation according to the present disclosure is prepared by mixing an aqueous alkyd resin, a melamine resin, and an extender pigment in a solvent. The aqueous alkyd resin and the melamine resin used in the preparation may themselves contain solvent. Further, the extender pigment may adsorb moisture from the air. For this reason, when indicating the content of each component, it is appropriate to indicate the content as solid content equivalent, rather than the content of the components actually mixed. Specifically, the mass of the solid content of the aqueous alkyd resin contained in the coating agent for etching resist coating formation is taken as 100 parts by mass, and the content is expressed in parts by mass of the solid content of other components converted based on this.

The content of each component expressed as solid content equivalent does not change before and after the application and baking treatment of the coating agent for etching resist coating formation. Therefore, by quantitatively analyzing the components of the etching resist coating after baking treatment, it is possible to know the content of each component, as solid content equivalent, contained in the coating agent for etching resist coating formation before baking treatment.

### <Components of coating agent for etching resist coating formation>

Hereinafter, each component contained in the coating agent for etching resist coating formation according to the present disclosure is described.

### (1) Aqueous alkyd resin

The coating agent for etching resist coating formation according to the present disclosure contains 100 parts by mass, as solid content equivalent, of an aqueous alkyd resin in a solvent. As described above, the aqueous alkyd resin is the main component of the coating agent for etching resist coating formation according to the present disclosure, and also becomes the main component of the etching resist coating after application and baking treatment. Aqueous resin is a general term for a water-dispersed resin in which resin is uniformly dispersed in water, and for a water-soluble resin that is easily soluble in water.

As the aqueous alkyd resin, any conventionally known resin may be used without any particular limitation. The alkyd resin that is a material of the aqueous alkyd resin may be obtained by subjecting a polybasic acid, a polyhydric alcohol, and an oil or fat or processed oil/fat to a dehydration condensation reaction, and optionally further reacting with a monobasic acid. According to a preferred embodiment, the coating agent for etching resist coating formation according to the present disclosure is an aqueous alkyd resin obtained by reacting an alkyd resin with a polymerizable vinyl monomer. According to this preferred embodiment, by using an aqueous alkyd resin obtained by reacting an alkyd resin with a polymerizable vinyl monomer, it is possible to obtain a coating agent for etching resist coating formation that is capable of forming an etching resist coating having an excellent resist property and removability.

### • Polybasic acid

Examples of polybasic acids used in the synthesis of alkyd resins include phthalic acid, isophthalic acid, terephthalic acid, trimellitic acid, tetrahydrophthalic acid, succinic acid, maleic acid, adipic acid, sebacic acid, azelaic acid, himic acid, itaconic acid, methylhexahydrophthalic acid, 1,4-cyclohexanedicarboxylic acid, methylcyclohexenetricarboxylic acid, pyromellitic acid, and anhydrides thereof. These polybasic acids may be used alone or in a combination of two or more.

### • Polyhydric alcohol

Examples of polyhydric alcohols used in the synthesis of alkyd resins include ethylene glycol, polyethylene glycol, propylene glycol, polypropylene glycol, butanediol, decanediol, diethylene glycol, pentanediol, neopentyl glycol, butylethylpropanediol, glycerin, trimethylolethane, trimethylolpropane, pentaerythritol, sorbitol, 1,4-cyclohexanedimethanol, and tricyclodecanedimethanol. These polyhydric alcohols may be used alone or in a combination of two or more.

### • Oil or fat or processed oil/fat

Examples of oils or fats used in the synthesis of alkyd resins include tung oil, linseed oil, dehydrated castor oil, safflower oil, soybean oil, castor oil, tall oil, rice bran oil, and fatty acids thereof, high diene fatty acids, and the like. Further, as processed oil/fat, processed oil/fat obtained using the oils and fats above as a main raw material may be used. Examples of such processed oil/fat include modified oils, isomerized oils, polymerized oils, maleated oils, boiled oils, and the like that are obtained using the oils or fats above as main raw materials. These oils or fats or processed oils/fats may be used alone or in a combination of two or more.

### • Monobasic acid

Monobasic acids optionally used in the synthesis of the alkyd resin include, for example, benzoic acid, p-t-butylbenzoic acid, methylbenzoic acid, versatic acid, isodecanoic acid, isotridecanoic acid, crotonic acid, non-drying oil fatty acids, and the like. These monobasic acids can be used alone or in a combination of two or more.

### • Polymerizable vinyl monomer

According to a preferred embodiment of the present disclosure, as the polymerizable vinyl monomer to be reacted with the alkyd resin to obtain the aqueous alkyd resin, any conventionally known polymerizable vinyl monomer may be used without particular limitation. Examples of the polymerizable vinyl monomer used in the reaction with the alkyd resin include (meth)acrylic acid ester monomers such as methyl (meth)acrylate, ethyl (meth)acrylate, n-propyl (meth)acrylate, cyclohexyl (meth)acrylate, methylcyclohexyl (meth)acrylate, ethylcyclohexyl (meth)acrylate, cycloheptyl (meth)acrylate, tolyl (meth)acrylate, and glycidyl (meth)acrylate; aromatic polymerizable unsaturated monomers such as styrene, α-methylstyrene, chlorostyrene, vinyltoluene, vinylnaphthalene, phenyl (meth)acrylate, benzyl (meth)acrylate, and vinyl benzoate; vinyl monomers such as vinyl acetate and vinyl propionate; N-alkoxy-substituted amide monomers such as N-methoxymethyl(meth)acrylamide, N-ethoxymethyl(meth)acrylamide and N-butoxymethyl(meth)acrylamide; fluorine-containing vinyl monomers such as perfluoroethylene, perfluoropropylene and vinylidene fluoride; silicon-containing vinyl monomers such as vinyltrimethoxysilane and vinyltriethoxysilane; dialkyl esters such as maleic acid and fumaric acid; alkenes such as ethylene and propylene; conjugated dienes such as butadiene and isoprene; monomers such as vinyl chloride and allyl chloride; (meth)acrylic acid, itaconic acid, maleic acid monomethyl ester, maleic acid monobutyl ester, itaconic acid monobutyl ester, sulfonic acid group-containing (meth)acrylate, phosphoric acid group-containing (meth)acrylate, 2-hydroxyethyl (meth)acrylate, 2-hydroxypropyl (meth)acrylate, 3-hydroxypropyl (meth)acrylate, 4-hydroxybutyl (meth)acrylate; lactone adducts to 2-hydroxyethyl (meth)acrylate, ring-opening adducts of ethylene oxide to 2-hydroxyethyl (meth)acrylate or 2-hydroxypropyl (meth)acrylate, ring-opening adducts of propylene oxide to 2-hydroxyethyl (meth)acrylate or 2-hydroxypropyl (meth)acrylate, dimers or trimers of 2-hydroxyethyl (meth)acrylate or 2-hydroxypropyl (meth)acrylate, N,N-dimethylaminoethyl (meth)acrylate, N,N-methylethylaminoethyl (meth)acrylate, N,N-diethylaminoethyl (meth)acrylate, N,N-dipropylaminoethyl (meth)acrylate, N,N-dimethylaminopropyl (meth)acrylate, N,N-methylpropylaminopropyl (meth)acrylate, N,N-diethylaminopropyl (meth)acrylate, N,N-dipropylaminopropyl (meth)acrylate, N,N-dimethylaminopropylacrylamide, and N,N-diethylaminopropylacrylamide. These polymerizable vinyl monomers may be used alone or in a combination of two or more.

The aqueous alkyd resin may be a commercially available product or may be synthesized from raw materials. When using a commercially available product, it is preferable to use one synthesized using any of the compounds listed above as a raw material. When the aqueous alkyd resin is synthesized from raw materials, it is preferable to carry out the following procedure. First, defined amounts of polybasic acid, polyhydric alcohol, oil or fat or processed oil/fat, and optionally monobasic acid, are charged into a reaction vessel, and the contents are heated with stirring to cause a dehydration condensation reaction. When the acid value of the solid content reaches 3 mgKOH/g to 30 mgKOH/g, heating is stopped and the mixture is cooled. The acid value of the solid content is preferably measured in accordance with Japanese Industrial Standard JIS K 0070. Next, a solvent is added to the resulting reaction mixture to prepare an alkyd resin solution, and the alkyd resin solution is heated with stirring, and a mixture of a polymerizable vinyl monomer and a polymerization initiator that has been prepared in advance is added dropwise. After the dropwise addition is completed, the polymerization initiator is further added dropwise to the reaction mixture, which is then stirred to carry out the reaction. Further, a neutralizing agent and a solvent are added to the reaction mixture and mixed to obtain a solution containing an aqueous alkyd resin.

The aqueous alkyd resin synthesized by the above procedure preferably has an acid value of 30 mgKOH/g or more and 80 mgKOH/g or less, a hydroxyl value of 50 mgKOH/g or more and 150 mgKOH/g or less, a number-average molecular weight of 2000 or more and 10,000 or less, and a weight-average molecular weight of 10,000 or more and 50,000 or less.

The solvent used in synthesizing the aqueous alkyd resin is not particularly limited. Preferred examples of the solvent include glycol ethers such as ethylene glycol mono-n-butyl ether, diethylene glycol mono-n-butyl ether, propylene glycol monomethyl ether, propylene glycol monoethyl ether, propylene glycol mono-n-butyl ether, propylene glycol mono-t-butyl ether, dipropylene glycol monomethyl ether, methyl cellosolve, ethyl cellosolve, and t-butyl cellosolve; and alcohols such as isopropyl alcohol and butyl alcohol.

The polymerization initiator used in synthesizing the aqueous alkyd resin is not particularly limited. Preferred examples of the polymerization initiator include dibenzoyl peroxide and 2,2'-azobisbutyronitrile.

The neutralizing agent used in synthesizing the aqueous alkyd resin is not particularly limited. Preferred neutralizing agents include, for example, triethylamine and diethylethanolamine.

### (2) Melamine resin

The coating agent for etching resist coating formation according to the present disclosure contains 0.10 parts by mass or more and 30 parts by mass or less of a melamine resin as solid content equivalent in a solvent. The melamine resin is contained in the coating agent for etching resist coating formation as a crosslinking agent that crosslinks the aqueous alkyd resin. The inclusion of melamine resin enhances adhesion between the etching resist coating and the grain-oriented electrical steel sheet. As the melamine resin, for example, methylated melamine, butylated melamine, and the like may be used.

When the solvent contains 0.10 parts by mass or more of melamine resin per 100 parts by mass of the aqueous alkyd resin in solid content equivalent, the adhesion between the formed etching resist coating and the grain-oriented electrical steel sheet is enhanced, and the resist property is improved. On the other hand, when the solvent contains 30 parts by mass or less of melamine resin, the crosslink density does not increase excessively. This allows the etching resist coating to maintain appropriate hardness and adhesion, so that the removability of the etching resist coating does not degrade. Therefore, the content of the melamine resin is 0.10 parts by mass or more and 30 parts by mass or less relative to 100 parts by mass of the aqueous alkyd resin, as solid content equivalent. The content of the melamine resin is preferably 1.0 part by mass or more. The content of the melamine resin is more preferably 2.0 parts by mass or more. The content of the melamine resin is preferably 20 parts by mass or less. The content of the melamine resin is more preferably 15 parts by mass or less.

### (3) Extender pigment

The coating agent for etching resist coating formation according to the present disclosure contains 5.0 parts by mass or more and 100 parts by mass or less of an extender pigment as solid content equivalent in solvent. The extender pigment is contained in the coating agent for etching resist coating formation as an extender for the coating. Extender pigments are generally inexpensive and chemically stable, and therefore may be suitably used as extenders for etching resist coatings. The type of extender pigment is not particularly limited, and various known extender pigments may be used. Preferred examples of the extender pigment include calcium carbonate, barium sulfate, and aluminum hydroxide. These extender pigments may be used alone or in a combination of two or more.

When the content of the extender pigment is 5.0 parts by mass or more per 100 parts by mass of the solid content of the aqueous alkyd resin, as solid content equivalent in solvent, securing the thickness of the etching resist coating becomes easier, and the resist property is improved. On the other hand, when the content of the extender pigment is 100 parts by mass or less, the concentration of the extender pigment does not become excessive, and the adhesion and the resist property do not degrade. The content of the extender pigment is therefore 5.0 parts by mass or more and 100 parts by mass or less per 100 parts by mass of the aqueous alkyd resin, as solid content equivalent. The content of the extender pigment is preferably 6.0 parts by mass or more. The content of the extender pigment is more preferably 10 parts by mass or more. The content of the extender pigment is preferably 80 parts by mass or less. The content of the extender pigment is more preferably 50 parts by mass or less.

In the coating agent for etching resist coating formation according to the present disclosure, the total amount of the solid content of the aqueous alkyd resin, the melamine resin and the extender pigment is 80 mass% or more of the total solid content. Hereinafter, "total solid content" refers to the total amount of solid content of all components contained in the coating agent for etching resist coating formation. When the proportion of the total amount of the solid content of the aqueous alkyd resin, the melamine resin and the extender pigment to the total solid content is 80 mass% or more, the components of the etching resist coating formed by the coating agent for etching resist coating formation are not greatly diluted by other components described later. The effects of the present disclosure exhibited by the etching resist coating are therefore not impaired. There is no particular upper limit on the proportion of the total amount of the solid content of the aqueous alkyd resin, the melamine resin and the extender pigment in the total solid content, and the proportion of the total amount may be 100 mass% or less.

### (4) Solvent

The coating agent for etching resist coating formation according to the present disclosure contains an aqueous alkyd resin, a melamine resin, and an extender pigment in a solvent. The solvent functions as a solvent for uniformly dissolving the resin and uniformly mixing the pigment, and also makes it easy to apply the coating agent for etching resist coating formation. Further, from the viewpoint of affinity with the aqueous alkyd resin, the solvent more preferably contains ethylene glycol mono-n-butyl ether.

The solvent may be mixed with a hydrophilic solvent. Specific examples of hydrophilic solvent include glycol ethers such as diethylene glycol mono-n-butyl ether, propylene glycol monomethyl ether, propylene glycol monoethyl ether, propylene glycol mono-n-butyl ether, propylene glycol mono-t-butyl ether, dipropylene glycol monomethyl ether, methyl cellosolve, ethyl cellosolve, and t-butyl cellosolve, and alcohols such as isopropyl alcohol and butyl alcohol. These solvents may be used alone or in a combination of two or more.

The solvent may be mixed with a hydrophobic solvent such as toluene or xylene. These hydrophobic solvents may be used alone or in a combination of two or more.

The proportion of the solvent in the coating agent for etching resist coating formation is not particularly limited. The proportion of the solvent is preferably 20 mass% or more. The proportion of the solvent is preferably 90 mass% or less. That is, the proportion of the total solid content in the coating agent for etching resist coating formation is preferably 10 mass% or more. The proportion of the total solid content is preferably 80 mass% or less. When the amounts of the solvent and total solid in the coating agent for etching resist coating formation are within the above ranges, the coating agent for etching resist coating formation has good storage stability and good workability when applied to a grain-oriented electrical steel sheet.

### (5) Other components

According to a preferred embodiment, the coating agent for etching resist coating formation according to the present disclosure further contains, in a solvent, one or more selected from a surfactant, a rust inhibitor, a lubricant, a leveling agent, a neutralizing agent, a defoamer, an antioxidant, and a coloring pigment. These components are added to further improve the performance and uniform coating property of the etching resist coating. These other components may be used alone or in a combination of two or more. When the total amount of the solid content of these other components is 20 mass% or less of the total solid content, the performance of the etching resist coating can be sufficiently maintained.

### <Method of producing coating agent for etching resist coating formation>

Next, a method of producing the coating agent for etching resist coating formation according to the present disclosure is described. The method of producing the coating agent for etching resist coating formation is not particularly limited. The following procedure is preferably carried out. First, a portion of the solution containing the aqueous alkyd resin is charged into a reaction vessel equipped with a stirrer, a thermometer, a reflux condenser, and the like, and the extender pigment and, as required, a hydrophilic solvent are added and uniformly dispersed. Next, the remainder of the solution containing the aqueous alkyd resin and the melamine resin are added and dispersed to obtain a dispersion. To the obtained dispersion, a leveling agent, a neutralizing agent, a defoamer, and solvent or water are added as required to prepare the coating agent for etching resist coating formation.

### <Method of producing steel sheet with etching resist coating>

Next, a preferred method of producing a steel sheet with an etching resist coating using the coating agent for etching resist coating formation according to the present disclosure is described. However, the method of producing the steel sheet with the etching resist coating using the coating agent for etching resist coating formation according to the present disclosure is not limited to the method described here.

### (1) Steel sheet

First, a steel sheet to be coated with the coating agent for etching resist coating formation is prepared. The steel sheet to be coated with the coating agent for etching resist coating formation is any steel sheet that will ultimately become a grain-oriented electrical steel sheet and that has been subjected to hot rolling. Here, grain-oriented electrical steel sheets are typically produced by the following process. That is, a steel slab is hot rolled to obtain a hot-rolled steel sheet, and then the hot-rolled steel sheet or a hot-rolled and annealed sheet obtained by subjecting the hot-rolled steel sheet to hot-rolled sheet annealing is subjected to cold rolling once or two or more times with intermediate annealing in between to obtain a cold-rolled steel sheet. The cold-rolled steel sheet is then subjected to primary recrystallization annealing to obtain a primary recrystallized sheet, and then the primary recrystallized sheet is subjected to secondary recrystallization annealing to obtain a secondary recrystallized sheet.

When the grain-oriented electrical steel sheet is produced using a steel sheet with an etching resist coating, the components and composition of the grain-oriented electrical steel sheet finally obtained are not particularly limited. The thickness of the grain-oriented electrical steel sheet is not particularly limited. When the steel sheet is thin, iron loss is low. However, when the steel sheet is excessively thin, not only shape stability decreases, but also production cost of the steel sheet increases. The thickness of the grain-oriented electrical steel sheet is therefore preferably 50 µm or more. Further, when the electrical steel sheet is thicker, the iron loss is higher. The thickness of the grain-oriented electrical steel sheet is therefore preferably 0.50 mm or less. The thickness is more preferably 0.30 mm or less.

According to the present disclosure, there are two types of steel sheets to which the coating agent for etching resist coating formation is applied. One is a grain-oriented electrical steel sheet that is a finished product obtained by completing all the steps up to the secondary recrystallization annealing described above. The other type is a steel sheet that is an intermediate product in the production of a grain-oriented electrical steel sheet. Specific examples of the latter include a hot-rolled steel sheet after hot rolling, a hot-rolled and annealed sheet obtained by hot-rolled sheet annealing a hot-rolled steel sheet, a cold-rolled steel sheet after cold rolling in a case where cold rolling is carried out once, a cold-rolled steel sheet before or after intermediate annealing or a cold-rolled steel sheet after intermediate annealing and cold rolling in a case where cold rolling is carried out two or more times with intermediate annealing in between, and a primary recrystallized sheet after primary recrystallization annealing. Hereinafter, the steel sheet to which the coating agent for etching resist coating formation is applied is referred to as "steel sheet" regardless of whether it is the above-mentioned finished product or intermediate product.

According to the present disclosure, the subject of etching treatment by coating with the coating agent for etching resist coating formation may be the steel sheet of any of the above-mentioned finished products or intermediate products. However, when an intermediate product is subjected to an etching treatment to form grooves on the surface of the steel sheet and then further rolled, the grooves formed by the etching treatment may disappear. For this reason, when an intermediate product is used, it is preferable to use a cold-rolled steel sheet or a primary recrystallized sheet after all cold rolling has been completed.

According to the present disclosure, the etching resist coating formed on the surface of the grain-oriented electrical steel sheet may be burned away or change under the high temperatures that are generated when the steel sheet is subjected to heat treatment. Therefore, when an intermediate product described above is used as the steel sheet to which the coating agent for etching resist coating formation is applied, it is preferable to carry out the application of the coating agent for etching resist coating formation, the subsequent baking treatment, and the etching treatment in succession, and then carry out subsequent processes involving heat treatment. The series of processes for forming grooves on the surface of the grain-oriented electrical steel sheet may be carried out once, and may be carried out twice or more.

### (2) Application of coating agent for etching resist coating formation

Next, the coating agent for etching resist coating formation is applied to at least one surface of the hot-rolled steel sheet, leaving a plurality of non-coated regions in which the coating agent for etching resist coating formation is not applied and which are linearly arranged along a direction intersecting the rolling direction of the steel sheet. The surface to which the coating agent for etching resist coating formation is applied may be one surface of the steel material, or both surfaces of the steel material.

The method of applying the coating agent for etching resist coating formation is not particularly limited. When gravure printing is used as a method of applying the coating agent for etching resist coating formation, a coated region where an etching resist coating is formed and a non-coated region where no etching resist coating is applied may be formed simultaneously.

According to the present disclosure, the direction in which the linear non-coated regions are provided is a direction intersecting the rolling direction, and an angle between the rolling direction and the direction along which the linear non-coated regions extend is preferably 50° or more. The angle is more preferably 60° or more. The angle is most preferably 90°. The non-coated regions may each have a continuous line shape, and may each be discontinuous. The non-coated regions may or may not be spaced at equal intervals. The width of each non-coated region may be, for example, 0.20 mm.

### (3) Baking treatment of coating agent for etching resist coating formation

Next, the steel sheet coated with the coating agent for etching resist coating formation is subjected to a baking treatment. The method of carrying out the baking treatment is not particularly limited, and a baking treatment using a commonly used method such as hot air, infrared heating, or induction heating may be applied.

A temperature of the baking treatment may be any temperature typically used. The temperature of the baking treatment, in terms of steel sheet maximum arrival temperature, is preferably 120 °C or higher. The temperature of the baking treatment is preferably 350 °C or lower. Hereinafter, "steel sheet maximum arrival temperature" refers to the temperature measured at the surface of the steel sheet as the maximum temperature reached in the heat treatment process. When the steel sheet maximum arrival temperature is 120 °C or higher, the curing of the coating agent for etching resist coating formation proceeds sufficiently. When the steel sheet maximum arrival temperature is 350 °C or lower, decomposition of the etching resist coating due to heat may be prevented. The steel sheet maximum arrival temperature is more preferably 300 °C or lower. The baking time in the baking treatment, that is, the time from the start of heating until the steel sheet maximum arrival temperature is reached, is not particularly limited. The baking time is preferably about 10 s to 60 s.

According to the method of producing a grain-oriented electrical steel sheet, coating weight of the etching resist coating per side is preferably 0.50 g/m² or more. By setting the coating weight of the etching resist coating to 0.50 g/m² or more, it is possible to provide a grain-oriented electrical steel sheet with an etching resist coating that has a particularly good resist property. The coating weight of the etching resist coating per side is more preferably 3.0 g/m² or more. Further, the coating weight of the etching resist coating per side is preferably 20 g/m² or less. By setting the coating weight of the etching resist coating to 20 g/m² or less, degradation of the adhesion of the coating and an increase in costs can be prevented. The coating weight of the etching resist coating per side may be determined by dissolving and removing only the etching resist coating from the grain-oriented electrical steel sheet with the etching resist coating after baking treatment using a hot alkali or the like, and measuring a change in weight of the grain-oriented electrical steel sheet before and after the removal.

### (4) Etching treatment

Next, the steel sheet on which the etching resist coating has been formed is subjected to an etching treatment to form grooves on the surface of the steel sheet in the non-coated regions. The method of the etching treatment is not particularly limited, and may be, for example, electrolytic etching. When electrolytic etching is carried out, preferably NaCl, KCl, CaCl₂, NaNO₃, or the like is used as the electrolyte solution, current density is preferably about 5 A/dm² to 20 A/dm², and electrolysis time is preferably about 5 s to 20 s. The conditions of the above etching treatment are preferably adjusted so that, in a cross-section perpendicular to the extension direction of the groove formed by the etching treatment, an angle between a side wall of the groove and the thickness direction is 60° or less, and a height of a convex portion formed at the bottom of the groove is 1/2 or less of the maximum depth of the groove. By adjusting the shape of the groove in this way, non-uniform strain is introduced, which enhances the effect of decreasing iron loss. The depth of the groove may be, for example, 20 µm.

In the method of producing a grain-oriented electrical steel sheet, after the etching treatment, the remaining treatments required to make the steel sheet a grain-oriented electrical steel sheet are appropriately carried out depending on the processing stage of the steel sheet in the above-mentioned process of producing the grain-oriented electrical steel sheet, thereby making it possible to produce a grain-oriented electrical steel sheet with decreased iron loss.

In the method of producing a grain-oriented electrical steel sheet, after grooves are formed by etching treatment, the etching resist coating remains. This etching resist coating may or may not be removed after the etching treatment. In the case where the etching resist coating is not removed, the etching resist coating may also function as an insulating tension coating. When removing the etching resist coating, the method of removal is not particularly limited, and any known method may be used. As a method of removing the etching resist coating, for example, a method may be adopted in which the grain-oriented electrical steel sheet is immersed in an alkaline solution such as an aqueous NaOH solution to soften the etching resist coating, and then the etching resist coating is washed away and removed using a brush.

### EXAMPLES

Effects of the present disclosure are described in detail below based on examples, but the present disclosure is not limited to these examples.

### (1) Production of coating agent for etching resist coating formation

As starting materials, the resin, the melamine resin, the extender pigment and the other components listed in Table 1 were prepared. Among the starting materials listed in Table 1, the aqueous alkyd resin indicated by reference sign a1 was produced by the method described below. Other starting materials used were those with the manufacturers and trade names listed in Table 1.

### [Table 1]

**Table 1**

| Component | Name | Manufacturer | Trade name | Ref sign |
|---|---|---|---|---|
| Resin | Aqueous alkyd resin | - | - | a1 |
| | Aqueous alkyd resin | DIC Corporation | WATERSOL S-117 | a2 |
| | Aqueous epoxy resin | ADEKA Corporation | ADEKA RESIN EM-101-50 | a3 |
| Melamine resin | Methylated melamine | DIC Corporation | WATERSOL S-695 | b1 |
| | Butylated melamine | Mitsui Chemicals, Inc. | U-VAN 28-60 | b2 |
| Extender pigment | Calcium carbonate | Mamo Calcium Co., Ltd. | TF heavy coal | c1 |
| | Barium sulfate | Sakai Chemical Industry Co., Ltd. | BARIFINE BF-20 | c2 |
| Other components | Organic pigment | Dainichiseika Color & Chemicals Mfg. Co., Ltd. | Cyanine Blue 4920 | d1 |
| | Organic pigment | Dainichiseika Color & Chemicals Mfg. Co., Ltd. | PV Fast Red HF4B | d2 |
| | Surfactant | Kyoeisha Chemical Co., Ltd. | Polyflow WS | d3 |
| | Surfactant | BYK Japan KK | BYK-381 | d4 |

| | | | | |
|---|---|---|---|---|
| Underlining indicates a component that is outside an appropriate range of the present disclosure. WATERSOL is a registered trademark of DIC Corporation. ADEKA RESIN is a registered trademark of ADEKA Corporation. U-VAN is a registered trademark of Mitsui Chemicals, Inc. BYK is a registered trademark of BYK-Chemie GmbH. | | | | |

The aqueous alkyd resin indicated by the reference sign a1 in Table 1 was produced by the method described below. First, 75 parts by mass of linseed oil, 16 parts by mass of glycerin, 40 parts by mass of phthalic anhydride, 1 part by mass of maleic anhydride, 20 parts by mass of pentaerythritol, and 5 parts by mass of xylene were charged into a reaction vessel equipped with a stirrer, a thermometer, a reflux condenser, a dehydrator, a nitrogen gas inlet tube, and the like, and the mixture was stirred while being heated under a nitrogen atmosphere until the temperature of the mixture reached 220 °C, and the reaction was continued until the acid value of the solid content of the mixture reached 8 mgKOH/g, followed by cooling. The acid value of the solid content was measured in accordance with Japanese Industrial Standard JIS K 0070. Next, 72 parts by mass of ethylene glycol mono-n-butyl ether was added as a solvent to the obtained reaction mixture and mixed to obtain an alkyd resin solution having an oil length of 55 %, an acid value of 8 mgKOH/g, a hydroxyl value of 120 mgKOH/g, a heating residue of 65 %, a number-average molecular weight of 3200 and a weight-average molecular weight of 19,500.

Next, 150 parts by mass of the obtained alkyd resin solution was charged into a reaction vessel equipped with a stirrer, a thermometer, a reflux condenser, and the like, and stirred while heating. Once the temperature of the solution reached 110 °C, a mixture obtained by previously mixing 16 parts by mass of styrene, 16 parts by mass of methyl methacrylate, 4 parts by mass of acrylic acid, and 1 part by mass of dibenzoyl peroxide as a polymerization initiator was added dropwise over 4 h, thereby carrying out a dehydration condensation reaction. After completion of the dropwise addition, while maintaining the reaction mixture at 110 °C, a mixture of 0.5 parts by mass of dibenzoyl peroxide and 5 parts by mass of ethylene glycol mono-n-butyl ether was further added dropwise as a polymerization initiator over a period of 3 h, followed by continued stirring at 110 °C for 2 h to carry out the reaction, and then cooling. Next, 14 parts by mass of triethylamine was added to the obtained reaction mixture and stirred, and then 5 parts by mass of ethylene glycol mono-n-butyl ether was added and mixed to obtain a solution containing an aqueous alkyd resin having an oil length of 38, an acid value of 56 mgKOH/g, a hydroxyl value of 84 mgKOH/g, a heating residue of 65 %, a number-average molecular weight of 3200 and a weight-average molecular weight of 25,700 (reference sign a1 in Table 1).

Next, the starting materials listed in Table 1 were mixed according to the following procedure to prepare coating agents for etching resist coating formation having the components and content as solid content equivalent listed in Table 2. First, a portion of the solution containing the resin was placed in a disperser, and the extender pigment, the organic pigment (d1 or d2) among the other components, and ethylene glycol mono-n-butyl ether (5 mass% of the total) as a solvent were added and uniformly dispersed, and a particle gauge was used to confirm that the particle size of the extender pigment was 10 µm or less. Next, the remainder of the resin and the melamine resin were added and dispersed to obtain a dispersion. Further, in order to improve a film-forming property, a surfactant (d3 or d4) from the other components was added to the obtained dispersion in an amount of 0.5 mass% of the total. Further, triethylamine as a neutralizing agent and ethylene glycol mono-n-butyl ether as a solvent were added to adjust the pH of the coating agent for etching resist coating formation to 9.0 and the solid content to 60 mass%, respectively.

Table 2 lists the components and the content as solid content equivalent of the obtained 23 types of coating agent for etching resist coating formation having different components and compositions. The content of each component listed in Table 2 in terms of mass% is the proportion of the solid content of each component to the total solid content. Further, the content indicated in parts by mass are the parts by mass of other components based on 100 parts by mass of the resin (reference signs a1, a2, or a3). It should be noted that, among the coating agents for etching resist coating formation listed in Table 2, Comparative Example No. 23 uses an aqueous epoxy resin (reference sign a3) as the resin instead of an aqueous alkyd resin.

### [Table 2]

**Table 2**

| No. | Components and content of coating agent for etching resist coating formation (solid content equivalent) | | | | | | | | | | | | Remarks |
|---|---|---|---|---|---|---|---|---|---|---|---|---|---|
| | Resin | | | Melamine resin | | | Extender pigment | | | Other components | | | |
| | Ref sign | Content (mass%) | Content (Parts by mass) | Ref. sign | Content (mass%) | Content (Parts by mass) | Ref. sign | Content (mass%) | Content (Parts by mass) | Ref sign | Content (mass%) | Content (Parts by mass) | |
| 1 | a1 | 68.8 | 100 | b1 | 1.5 | 2.2 | c1 | 25.7 | 37.4 | d1, d3 | 4.0 | 5.8 | Example |
| 2 | a2 | 68.8 | 100 | b1 | 1.5 | 2.2 | c1 | 25.7 | 37.4 | d1, d3 | 4.0 | 5.8 | Example |
| 3 | a1 | 68.8 | 100 | b2 | 1.5 | 2.2 | c1 | 25.7 | 37.4 | d1, d3 | 4.0 | 5.8 | Example |
| 4 | a1 | 68.8 | 100 | b1 | 1.5 | 2.2 | c2 | 25.7 | 37.4 | d1, d3 | 4.0 | 5.8 | Example |
| 5 | a1 | 68.8 | 100 | b1 | 1.5 | 2.2 | c1 | 25.7 | 37.4 | d2, d3 | 4.0 | 5.8 | Example |
| 6 | a1 | 68.8 | 100 | b1 | 1.5 | 2.2 | c1 | 25.7 | 37.4 | d1, d4 | 4.0 | 5.8 | Example |
| 7 | a1 | 69.8 | 100 | b1 | 0.1 | 0.1 | c1 | 26.1 | 37.4 | d1, d3 | 4.0 | 5.7 | Example |
| 8 | a1 | 64.6 | 100 | b1 | 7.5 | 11.6 | c1 | 24.1 | 37.3 | d1, d3 | 3.8 | 5.9 | Example |
| 9 | a1 | 58.4 | 100 | b1 | 16.4 | 28.1 | c1 | 21.8 | 37.3 | d1, d3 | 3.4 | 5.8 | Example |
| 10 | a1 | 87.7 | 100 | b1 | 1.9 | 2.2 | c1 | 5.3 | 6.0 | d1, d3 | 5.1 | 5.8 | Example |
| 11 | a1 | 49.3 | 100 | b1 | 1.1 | 2.2 | c1 | 46.8 | 94.9 | d1, d3 | 2.8 | 5.7 | Example |
| 12 | a1 | 58.7 | 100 | b1 | 1.3 | 2.2 | c1 | 21.9 | 37.3 | d1, d3 | 18.1 | 30.8 | Example |
| 13 | a1 | 68.8 | 100 | b1 | 1.5 | 2.2 | c1 | 25.7 | 37.4 | d1, d3 | 4.0 | 5.8 | Example |
| 14 | a1 | 68.8 | 100 | b1 | 1.5 | 2.2 | c1 | 25.7 | 37.4 | d1, d3 | 4.0 | 5.8 | Example |
| 15 | a1 | 68.8 | 100 | b1 | 1.5 | 2.2 | c1 | 25.7 | 37.4 | d1, d3 | 4.0 | 5.8 | Example |
| 16 | a1 | 68.8 | 100 | b1 | 1.5 | 2.2 | c1 | 25.7 | 37.4 | d1, d3 | 4.0 | 5.8 | Example |
| 17 | a1 | 68.8 | 100 | b1 | 1.5 | 2.2 | c1 | 25.7 | 37.4 | d1, d3 | 4.0 | 5.8 | Example |
| 18 | a1 | 69.9 | 100 | b1 | 0.01 | 0.01 | c1 | 26.1 | 37.3 | d1, d3 | 4.0 | 5.7 | Comparative Example |
| 19 | a1 | 49.2 | 100 | b1 | 29.5 | 60.0 | c1 | 18.4 | 37.4 | d1, d3 | 2.9 | 5.9 | Comparative Example |
| 20 | a1 | 89.3 | 100 | b1 | 2.0 | 2.2 | c1 | 3.6 | 4.0 | d1, d3 | 5.1 | 5.7 | Comparative Example |
| 21 | a1 | 46.9 | 100 | b1 | 1.0 | 2.1 | c1 | 49.2 | 104.9 | d1, d3 | 2.9 | 6.2 | Comparative Example |
| 22 | a1 | 47.3 | 100 | b1 | 1.0 | 2.1 | c1 | 17.7 | 37.4 | d1, d3 | 34.0 | 71.9 | Comparative Example |
| 23 | a3 | 68.8 | 100 | b1 | 1.5 | 2.2 | c1 | 25.7 | 37.4 | d1, d3 | 4.0 | 5.8 | Comparative Example |

| | | | | | | | | | | | | | |
|---|---|---|---|---|---|---|---|---|---|---|---|---|---|
| Underlining indicates component or content outside an appropriate range of the present disclosure. | | | | | | | | | | | | | |

### (2) Production of steel sheets with etching resist coating

A steel sheet measuring 150 mm wide and 300 mm long was cut out from a grain-oriented electrical steel having a thickness of 0.23 mm and used as a test material. The coating agent for etching resist coating formation produced by the above method was uniformly applied to the entire surface of one side of the test material using a roll coater. Next, the test material coated with the coating agent for etching resist coating formation was baked in a hot blast baking oven at the steel sheet maximum arrival temperature and drying time listed in Table 3, and then allowed to cool to room temperature to obtain a steel sheet with etching resist coating.

Next, the properties of the 23 types of steel sheets with etching resist coatings produced by the above method were evaluated by the following methods. The evaluation results are listed in Table 3.

### [Table 3]

**Table 3**

| No. | Baking conditions | | Etching resist coating property evaluation results | | | | | Remarks |
|---|---|---|---|---|---|---|---|---|
| | Steel sheet maximum arrival temp. (°C) | Drying time (s) | Coating weight (g/m²) | Adhesion | Scratch resistance | Resist property | Removability | |
| 1 | 170 | 20 | 6.5 | A | B | A | A | Example |
| 2 | 170 | 20 | 6.5 | A | B | A | A | Example |
| 3 | 170 | 20 | 6.5 | A | B | A | A | Example |
| 4 | 170 | 20 | 6.5 | A | B | A | A | Example |
| 5 | 170 | 20 | 6.5 | A | B | A | A | Example |
| 6 | 170 | 20 | 6.5 | A | B | A | A | Example |
| 7 | 170 | 20 | 6.5 | A | B | B | A | Example |
| 8 | 170 | 20 | 6.5 | A | B | A | A | Example |
| 9 | 170 | 20 | 6.5 | A | A | B | B | Example |
| 10 | 170 | 20 | 6.5 | A | B | B | B | Example |
| 11 | 170 | 20 | 6.5 | B | B | A | A | Example |
| 12 | 170 | 20 | 6.5 | B | B | A | A | Example |
| 13 | 120 | 20 | 6.5 | B | C | B | A | Example |
| 14 | 350 | 20 | 6.5 | B | B | B | A | Example |
| 15 | 170 | 20 | 0.5 | A | B | B | A | Example |
| 16 | 170 | 20 | 10.0 | A | B | A | A | Example |
| 17 | 170 | 20 | 20.0 | A | B | A | A | Example |
| 18 | 170 | 20 | 6.5 | F | F | F | A | Comparative Example |
| 19 | 170 | 20 | 6.5 | F | A | B | F | Comparative Example |
| 20 | 170 | 20 | 6.5 | A | B | F | B | Comparative Example |
| 21 | 170 | 20 | 6.5 | F | B | F | A | Comparative Example |
| 22 | 170 | 20 | 6.5 | F | B | F | A | Comparative Example |
| 23 | 170 | 20 | 6.5 | A | A | A | F | Comparative Example |

| | | | | | | | | |
|---|---|---|---|---|---|---|---|---|
| Underlining indicates "fail" for an etching resist coating property evaluation result. | | | | | | | | |

### <Coating weight>

The coating weight of the etching resist coating after the baking treatment was measured by a gravimetric method. Specifically, only the etching resist coating was dissolved and removed from the test material using a heated potassium hydroxide solution, and the change in weight of the steel sheet before and after dissolution removal was measured. The coating weight was calculated by dividing the measured weight change by the area of one side of the test material.

### <Adhesion>

The test material was cut to a size of 30 mm in width and 50 mm in length, and a cellophane adhesive tape having a width of 24 mm and a length of 50 mm was attached to the surface of the cut test material on which the etching resist coating was formed (the test surface). Next, the test material was bent 180° using a round bar with a diameter of 5 mm with the test surface as the compression side, and then the cellophane adhesive tape was peeled off, and the area ratio of the etching resist coating that adhered to the cellophane adhesive tape and peeled off was calculated, and the adhesion was evaluated according to the following criteria. A rating of A or B was considered a pass, and an F was considered a fail.

### (Evaluation criteria)

A: area ratio was 5.0 % or less
B: area ratio was greater than 5.0 % and 10 % or less
F: area ratio was greater than 10 %

### <Scratch resistance>

The test material was cut to a size of 100 mm in width and 200 mm in length, and two pieces were prepared for each type. For each pair of two test materials, the test surfaces on which the etching resist coating was formed were overlapped and slid in the longitudinal direction at a relative speed of 2 cm/s for 10 s while applying a pressure of 196 kPa (2 kgf/cm²) in the normal direction of the test surfaces. Next, scratches on the test surfaces were visually observed to calculate a scratch occurrence area ratio, and the scratch resistance was evaluated according to the following criteria. A rating of A, B, or C was considered a pass, and an F was considered a fail.

### (Evaluation criteria)

A: almost no scratching was observed
B: some scratching was observed
C: scratching was clearly visible
F: a scratch that exposed the steel substrate was observed

### <Resist property>

The test material was cut to a size of 30 mm in width and 250 mm in length and subjected to electrolytic etching. The appearance of the surface of the etching resist coating after electrolytic etching was visually observed, and the area ratio of portions where discoloration was observed was calculated to evaluate the resist property. As the electrolyte solution used for the electrolytic etching, a 20 % aqueous NaCl solution was used. The electrolytic etching conditions were an electrolyte solution temperature of 25 °C, a current density of 8 A/dm², and a current application time of 3 min. The resist property was evaluated according to the following criteria. A rating of A or B was considered a pass, and an F was considered a fail.

### (Evaluation criteria)

A: the area ratio of discolored portions was 0.0 % or less
B: the area ratio of discolored portions was greater than 0.0 % and 5.0 % or less
F: the area ratio of discolored portions was greater than 5.0 %

### <Removability>

The test material for evaluating the resist property was immersed in a 25 % sodium hydroxide aqueous solution at 50 °C for 10 s, then taken out and washed with water to remove the etching resist coating. After the etching resist coating was removed, the test surface of the test material was visually observed, and the area ratio of a portion where the etching resist coating had been removed was calculated to evaluate the removability. The removability was evaluated according to the following criteria. A rating of A or B was considered a pass, and an F was considered a fail.

### (Evaluation criteria)

A: the area ratio of the removed portion was 100 %
B: the area ratio of the removed portion was 90 % or more but less than 100 %
F: the area ratio of the removed portion was less than 90 %

According to the evaluation results in Table 3, the etching resist coating formed using the coating agent for etching resist coating formation according to the present disclosure passed all evaluation criteria in the property evaluation results. In contrast, for the test materials of No. 18 to 22, in which the content of the coating agent for etching resist coating formation in solid content equivalent did not satisfy a numerical range for content defined in the present disclosure, and for the test material of No. 23, in which an aqueous epoxy resin was used as the resin, at least one evaluation criteria was failed in the property evaluation results.

## Claims

1. A coating agent for etching resist coating formation, the coating agent comprising, as solid content equivalent in a solvent:
100 parts by mass of an aqueous alkyd resin;
0.10 parts by mass or more and 30 parts by mass or less of a melamine resin; and
5.0 parts by mass or more and 100 parts by mass or less of an extender pigment, wherein
a total amount of the solid content of the aqueous alkyd resin, the melamine resin, and the extender pigment is 80 mass% or more of total solid content.

2. The coating agent for etching resist coating formation according to claim 1, wherein the aqueous alkyd resin is an aqueous alkyd resin obtained by reacting an alkyd resin with a polymerizable vinyl monomer.

3. The coating agent for etching resist coating formation according to claim 1 or 2, wherein a proportion of the total solid content in the coating agent for etching resist coating formation is 10 mass% or more and 80 mass% or less.

4. The coating agent for etching resist coating formation according to any one of claims 1 to 3, wherein the solvent contains ethylene glycol mono-n-butyl ether.
